# EUROPÄISCHE PATENTSCHRIFT

(11) **EP 3 268 114 B1**
(45) Veröffentlichungstag und Bekanntmachung des Hinweises auf die Patenterteilung: **06.05.2020**
(21) Anmeldenummer: 15712271.4
(22) Anmeldetag: 11.03.2015
(51) Int. Cl.: B01D 53/83

(54) **RAUCHGASREINIGUNGSANLAGE UND VERFAHREN ZUR REINIGUNG VON RAUCHGAS**
FLUE GAS CLEANING INSTALLATION AND METHOD FOR CLEANING FLUE GAS
INSTALLATION D'ÉPURATION DE GAZ DE FUMÉE ET PROCÉDÉ D'ÉPURATION DE GAZ DE FUMÉE

(43) Veröffentlichungstag der Anmeldung: 17.01.2018
(73) Patentinhaber: Hamon Enviroserv GmbH, 44803 Bochum (DE)
(72) Erfinder: FELDKAMP, Markus, 46244 Bottrop (DE); DICKAMP, Markus, 44892 Bochum (DE); LI, Tianjing, 45141 Essen (DE); PRIEBE, Lars, 44879 Bochum (DE); MOSER, Christian, 45359 Essen (DE)
(74) Vertreter: Rausch Wanischeck-Bergmann Brinkmann
(86) Internationale Anmeldenummer: PCT/EP2015/055090
(87) Internationale Veröffentlichungsnummer: WO 2016/141988

(56) Entgegenhaltungen:
- EP-A1- 2 260 923
- EP-A1- 2 260 923
- AT-B- 400 004
- AT-B- 400 004
- US-A- 5 238 666
- US-A- 5 238 666
- US-A- 5 246 680
- US-A- 5 246 680
- US-A1- 2005 244 317
- US-A1- 2005 244 317

## Beschreibung

Die vorliegende Erfindung betrifft ein Verfahren zur Reinigung von Rauchgas. Ferner betrifft die Erfindung eine Rauchgasreinigungsanlage mit einem Wirbelschichtreaktor aufweisend eine Rauchgaseinlasseinheit, einen Reaktorraum und eine Düseneinheit, wobei die Düseneinheit zwischen Rauchgaseinlasseinheit und Reaktorraum angeordnet ist.

Rauchgasreinigungsanlagen sind im Stand der Technik umfangreich bekannt. Eine gattungsgemäße Anlage ist beispielsweise in der WO 2006/032288 A1 beschrieben. Mittels solcher Anlagen werden Verfahren zur Abscheidung von Schadgasen durchgeführt, beispielsweise HCl, HF, SO₂. Auch Dioxine, Furane und Schwermetalle, beispielsweise Quecksilber, können wirkungsvoll abgeschieden werden, wenn zusätzliche sogenannte Sorbenzien wie Herdofenkoks, Aktivkohle der dergleichen beigegeben werden. Zur Durchführung des Verfahrens werden üblicherweise Wirbelschichtreaktoren eingesetzt, in welche das zu reinigende Rauchgas über eine Rauchgaseinlasseinheit eingeleitet wird. Diese Einheit ist üblicherweise eine vom Kessel herangeführte Rohrleitung mit einem oder mehreren Auslässen in den Reaktorbereich. Im Reaktor wird ein Sorptionsmittel eingelagert oder eingebracht. Es bildet sich dann in bekannter Weise eine Wirbelschicht aus. Reaktoren können mit zirkulierenden Wirbelschichten oder im Flugstromverfahren betrieben werden. Das Rauchgas und das Sorptionsmittel reagieren miteinander und die Schadgase werden auf diese Weise aus dem Rauchgas abgeschieden. Das Gesamtgas, also Rauchgas mit den mitgeführten Abscheidungsrückständen und Sorptionsmittelresten wird über eine Rauchgasauslasseinheit in eine nachgeschaltete Abscheideeinheit, üblicherweise Filtereinheiten, weitergeleitet. In der Filtereinheit wird das Rauchgas von den Abscheidungsrückständen befreit und anschließend freigegeben. Die Abscheidungsrückstände werden zum Teil zum Wirbelschichtreaktor zurückgeführt oder nach Sammlung entsorgt oder weiterverwendet.

So ist es aus dem Stand der Technik insbesondere bekannt, zur Entschwefelung von Rauchgas als Sorptionsmittel Kalkstein (Calciumcarbonat; CaCO₃) oder gelöschten Kalk (Calciumhydroxid; Ca(OH)₂) zu verwenden. Diese werden wie vorbeschrieben im Wirbelschichtreaktor eingelagert oder eingebracht. Die Verwendung von gelöschtem Kalk hat sich dabei in den letzten Jahren als wirtschaftlichere Alternative zu Kalkstein etabliert, da die Einsatzmenge von gelöschtem Kalk gegenüber Kalkstein um ca. das 1,8-fache geringer ist. Darüber hinaus entsteht bei der chemischen Reaktion zwischen Rauchgas und gelöschtem Kalk Gips, welcher vorteilhafterweise weiterverwertet werden kann.

Aufgrund der hohen chemischen Reaktivität von gelöschtem Kalk hat sich allerdings insbesondere die generelle Handhabung, die Lagerhaltung und die Einbringung dieses Sorptionsmittels in den Wirbelschichtreaktor als vergleichsweise aufwändig erwiesen. Bei nicht sachgerechter Behandlung kann es demgemäß bereits während der Lagerung oder der Zuführung zum Reaktor zu unerwünschten Nebenreaktionen kommen, die mit einer Passivierung des Sorptionsmittels einhergehen und damit die Effizienz des Verfahrens verringern. Ferner wirkt gelöschter Kalk gegenüber Metallen vergleichsweise stark korrosiv. Vorrichtungsseitig führt dies zu einer verstärkten Abnutzung der Zuleitungskomponenten der Reinigungsanlagen, was die Lebensdauer dieser Komponenten nachteiligerweise verringert und zu einem erhöhten Wartungs- und Reparaturaufwand führt. Des Weiteren reagiert gelöschter Kalk mit Feuchtigkeit stark basisch. Bei der Handhabung sind daher vergleichsweise hohe Anforderungen an die Arbeitsplatzsicherheit zu stellen, was nachteiligerweise mit einer weiteren Steigerung des Verfahrensaufwandes verbunden ist und bei Unfällen zu einer gesundheitlichen Gefährdung der involvierten Personen führen kann.

Darüber hinaus offenbart die AT 400004 B ein Verfahren zur Reinigung von Rauchgas, bei dem das Rauchgas über einen Düsenboden in einen Wirbelschichtreaktor eingedüst wird. Es ist dabei vorteilhaft, Wasser in die Düsen des Düsenbodens einzuleiten, um es in den Reaktorraum einzubringen. Als Absorptionsmittel können Calciumoxid oder Calciumhydroxid eingesetzt werden.

Ferner ist aus der EP 2 260 923 A1 ein Verfahren zur Reinigung von Rauchgasmittel eines Wirbelschichtreaktors bekannt. Dabei wird das zu reinigende Rauchgas über einen Einlasskanal in den Wirbelschichtreaktor eingeleitet. Dabei wird Absorptionsmittel in Form von Calciumhydroxid verwendet. Dieses Absorptionsmittel wird über eine vom Einlasskanal separate Sorptionsmittelzuleitung in den Reaktorraum stromaufwärts des Einlasskanals eingebracht.

Beide Verfahren haben jedoch den Nachteil, dass diese nicht auf die bestimmungsgemäße Umwandlung eines Sorptionsmittels-Edukts in ein Sorptionsmittel im Reaktorraum ausgerichtet sind. Es sind daher stets anderweitige Mittel notwendig, um entweder das Sorptionsmittel während des Verfahrens zu erzeugen oder es wird von vornherein Sorptionsmittel eingedüst.

Ausgehend vom vorbekannten Stand der Technik liegt der vorliegenden Erfindung die **Aufgabe** zugrunde, ein Verfahren zur Reinigung von Rauchgas und eine Rauchgasreinigungsanlage bereitzustellen, bei denen die aus dem Stand der Technik bekannten Nachteile vermieden werden.

Verfahrensseitig wird zur technischen **Lösung** dieser Aufgabe ein Verfahren gemäß Anspruch 4 vorgeschlagen.

Erfindungsgemäß wird das hinsichtlich der Rauchgasreinigung wirksame Sorptionsmittel erst im Reaktorraum des Wirbelschichtreaktors gebildet. Es ist daher möglich, ein Sorptionsmittel-Edukt anstelle des eigentlichen Sorptionsmittels zu lagern und dem Wirbelschichtreaktor zuzuführen. Vorteilhafterweise kann hierbei ein solches Edukt verwendet werden, welches im Vergleich mit dem Sorptionsmittel hinsichtlich der generellen Handhabung, der Lagerhaltung und der Einbringung in den Wirbelschichtreaktor unproblematisch ist. Ferner werden durch die erfindungsgemäße Verfahrensführung die mit den Sorptionsmitteln verbundenen Gesundheitsrisiken für die involvierten Personen gesenkt und der mit der Einrichtung der gebotenen Arbeitssicherheitsmaßnahmen verbunden Aufwand reduziert. Darüber hinaus verhindert die Verwendung eines vorzugsweise unkorrosiven Sorptionsmittel-Eduktes die Abnutzung der Sorptionsmittelzuführungskomponenten, was zu einer längeren Lebensdauer dieser Komponenten führt und den Wartungs- und Reparaturaufwand der Anlage insgesamt senkt.

Erfindungsgemäß wird die Flüssigkeit gesondert vom Rauchgas und dem Sorptionsmittel-Edukt in den Reaktorraum eingedüst. Auf diesem Wege wird sichergestellt, dass die Umwandlungsreaktion erst im Reaktorraum unter kontrollierten Bedingungen abläuft und nicht bereits während der Zuleitung der einzelnen Reaktanden. Im Reaktorraum erfolgt dann erfindungsgemäß die Kontaktierung des Sorptionsmittel-Eduktes mit der Flüssigkeit, wobei das Sorptionsmittel-Edukt in das Sorptionsmittel umgewandelt wird. Erfindungsgemäß wird die Flüssigkeit bei der Eindüsung in den Reaktorraum des Wirbelschichtreaktors zerstäubt. Vorzugsweise wird hierdurch ein mit Flüssigkeit angereicherter Volumenbereich im Reaktorraum erzeugt, welchen das Sorptionsmittel-Edukt im unmittelbaren Anschluss an dessen Eindüsung durchqueren muss. Hierdurch wird eine umfassende Kontaktierung der Flüssigkeit mit dem Sorptionsmittel-Edukt sichergestellt, wodurch eine vergleichsweise hohe Ausbeute an Sorptionsmittel erreicht wird. Der Volumenbereich wird vorzugsweise derart erzeugt, dass er sich über den gesamten Querschnitt des Reaktorinnenraums erstreckt. Die Flüssigkeit wird gemäß einem bevorzugten Merkmal der Erfindung hierbei mittels einer Mehrzahl von Düsen derart zerstäubt, dass sich je Düse ein sich konisch in Eindüsungsrichtung verbreiterndes Zerstäubungsvolumen der Flüssigkeit bildet. Vorzugsweise wird die Flüssigkeit über die Mehrzahl von Düsen derart eingedüst, dass sich die konischen Zerstäubungsvolumina überschneiden. Auf diese Weise ist eine optimale Benetzung des Sorptionsmittel-Eduktes durch die Flüssigkeit gewährleistet.

Gemäß einem bevorzugten Merkmal der Erfindung wird das zu reinigende Rauchgas im Reaktorraum mit dem im Reaktorraum gebildeten Sorptionsmittel kontaktiert. Durch die unmittelbare Bildung des Sorptionsmittels im Reaktorraum wird eine maximale Aktivität und Wirksamkeit des Sorptionsmittels hinsichtlich der Rauchgasreinigung erreicht. Im Gegensatz zu den eingangs genannten, aus dem Stand der Technik bekannt gewordenen Verfahren, bei denen das Sorptionsmittel gelagert und in den Wirbelschichtreaktor eingebracht wird, werden die damit verbundenen Nachteile einer unerwünschten Depassivierung des Sorptionsmittels vermieden. Vorteilhafterweise wird damit die Effizienz der bei der Reinigung des Rauchgases ablaufenden chemischen Reaktion zwischen Bestandteilen des Rauchgases und dem Sorptionsmittel verbessert. Bei dem erfindungsgemäßen Verfahren wird infolgedessen insgesamt weniger Sorptionsmittel benötigt als bei den aus dem Stand der Technik bekannten Verfahren.

Gemäß einem bevorzugten Merkmal der Erfindung wird das Rauchgas durch den Kontakt mit dem im Reaktorraum gebildeten Sorptionsmittel entschwefelt. Im Sinne der Erfindung meint dies, die Bindung von Schwefelbestandteilen des Rauchgases durch das Sorptionsmittel. Es wird im Reaktorraum daher ein solches Sorptionsmittel gebildet, welches hinsichtlich der Entschwefelung wirksam ist. Erfindungsgemäß wird zu diesem Zweck gelöschter Kalk (Ca(OH)₂) gebildet. Ca(OH)₂ ist aus einer Mehrzahl möglicher Sorptionsmittel-Edukte darstellbar. Insbesondere aus Calciumoxid (CaO), Calciumnitrat (Ca(NO₃)₂) oder Calciumhydrid (CaH₂). Erfindungsgemäß ist die Darstellung von Ca(OH)₂ im Rahmen der Erfindung aus CaO und Wasser (Löschung). Calciumoxid ist im Gegensatz zu gelöschtem Kalk hinsichtlich Lagerhaltung und Korrosionseigenschaften vergleichsweise unproblematisch, was im Ergebnis zu einer vorteilhaften Verringerung des Lagerungsaufwandes des Sorptionsmittel-Eduktes sowie des Wartungs- und Reparaturaufwandes der Rauchgasreinigungsanlage führt. Auch die erfindungsgemäße Eindüsung von Wasser als Flüssigkeit im Rahmen der Löschung von Calciumoxid ist hinsichtlich dessen guter Verfügbarkeit und der vergleichsweise einfachen verfahrenstechnischen Handhabbarkeit von besonderem Vorteil. Der Einsatz von Wasser ist in diesem Zusammenhang nicht auf die Verwendung in Kombination mit Calciumoxid beschränkt, sondern führt auch in Reaktion mit den anderen vorgenannten Sorptionsmittel-Edukten zu gelöschtem Kalk.

Gemäß einem besonders bevorzugten Merkmal der Erfindung wird das Wasser bezogen auf das stöchiometrische Verhältnis zwischen Wasser und CaO bei der Bildungsreaktion von gelöschtem kalk im Überschuss eingedüst. Es hat sich gezeigt, dass sich hierdurch die Ausbeute an Sorptionsmittel steigern lässt. Anmelderseitig wird davon ausgegangen, dass dies insbesondere auf die Abführung der bei der Löschung des Calciumoxids entstehenden Reaktionswärme zurückzuführen ist.

Vorrichtungsseitig wird zur technischen **Lösung** der der Erfindung zugrunde liegenden Aufgabe eine Rauchgasreinigungsanlage gemäß Anspruch 1 vorgeschlagen.

Die Rauchgaseinlasseinheit dient gemäß der Erfindung dem Anschluss der Rauchgasreinigungsanlage an die extern erzeugten zu reinigenden Rauchgase und der Zuleitung dieser Gase zum Reaktorraum. Gemäß einer bevorzugten Ausgestaltung der Erfindung wird vorgeschlagen, dass die Rauchgaseinlasseinheit des Reaktors wenigstens zwei in einem Winkel zwischen 30° und 90° zueinander angeordnete Rauchgaseintritte aufweist. Auf diese Weise kann der Wirbelschichtreaktor mit unterschiedlichen Rauchgasströmen beaufschlagt werden. Es ergibt sich eine bessere An- und Durchströmung der Absorptionszone. Erfindungsgemäß schließt sich in vorteilhafter Weise an die Rauchgaseinlasseinheit eine Düseneinheit an. Dieses führt generell zu einer Durchströmungsverbesserung. Erfindungsgemäß verfügt die Düseneinheit über Düsen eines ersten Typs zur Eindüsung des zu reinigenden Rauchgases und eines Feststoffes. Die Düsen des ersten Typs sind dabei erfindungsgemäß als Venturi-Düsen ausgebildet. Vorzugsweise können die Rauchgaseinlasseinheit und/oder die einzelnen Düsen des ersten Typs der Düseneinheit seitliche Feststoffeinlässe aufweisen, so dass auf diese Weise eine homogenere Feststoffverteilung im Reaktorraum erfolgt. Es ergeben sich dabei auch geringere Druckverluste im Reaktorraum. Mit besonderem Vorteil wird vorgeschlagen, dass in der Düseneinheit Düsen des ersten Typs mit unterschiedlichem Querschnitt eingesetzt sind. Dies bezieht sich zum einen auf die Form, zum anderen auf den Durchmesser. So können Düsen des ersten Typs mit rundem und/oder eckigem Querschnitt und gleichen und/oder unterschiedlichen Durchmessern eingesetzt sein, Düsen mit unterschiedlichen Querschnittsformen wie Vielecken, rund und dergleichen oder beliebigen Kombinationen der beschriebenen Möglichkeiten eingesetzt sein.

Erfindungsgemäß weist die Düseneinheit Düsen eines zweiten Typs zur Eindüsung von Flüssigkeit in den Reaktorraum auf. Es ist hierdurch möglich, die eingedüste Flüssigkeit und den eingedüsten Feststoff, welcher verfahrensseitig wenigstens teilweise durch ein Sorptionsmittel-Edukt gebildet ist, im Reaktorraum in Kontakt zu bringen und das Sorptionsmittel erst im Reaktorraum zu erzeugen. Es ist daher möglich, ein Sorptionsmittel-Edukt anstelle des eigentlichen Sorptionsmittels zu lagern und dem Wirbelschichtreaktor zuzuführen. Vorteilhafterweise kann hierbei ein solches Edukt verwendet werden, welches im Vergleich mit dem Sorptionsmittel hinsichtlich der generellen Handhabung, der Lagerhaltung und der Einbringung in den Wirbelschichtreaktor unproblematisch ist. Darüber hinaus ermöglicht die erfindungsgemäße Vorrichtung die Verwendung eines vorzugsweise unkorrosiven Sorptionsmittel-Eduktes, wodurch die Abnutzung der an der Sorptionsmittelzuführung beteiligten Komponenten der Vorrichtung zu verringern, was zu einer längeren Lebensdauer dieser Komponenten führt und den Wartungs- und Reparaturaufwand der Reinigungsanlage insgesamt senkt. Die Düsen des zweiten Typs sind erfindungsgemäß aus Zerstäuberdüsen gebildet. Vorzugsweise kann hierdurch ein mit Flüssigkeit angereicherter Volumenbereich im Reaktorraum erzeugt werden, welchen das Sorptionsmittel-Edukt im Anschluss an dessen Eindüsung durchqueren muss. Hierdurch wird eine umfassende Kontaktierung der Flüssigkeit mit dem Sorptionsmittel-Edukt sichergestellt, wodurch eine vergleichsweise hohe Ausbeute an Sorptionsmittel erreicht wird.

Erfindungsgemäß entspricht die Anzahl der Düsen des ersten Typs im Wesentlichen der Anzahl der Düsen des zweiten Typs. Es hat sich herausgestellt, dass ein solches Verhältnis zwischen den unterschiedlichen Düsentypen eine optimale Durchmischung der Flüssigkeit mit dem Sorptionsmittel-Edukt erlaubt, was vorteilhafterweise zu einer Steigerung der Ausbeute an Sorptionsmittel führt. "Im Wesentlichen" bedeutet im Sinne der Erfindung ein Verhältnis zwischen der Anzahl der Düsen des ersten Typs und der Anzahl der Düsen des zweiten Typs von 0,8 bis 1,3. Das genaue Verhältnis ergibt sich vorzugsweise in Abhängigkeit der eingesetzten Edukte. In dem besonders bevorzugten Fall, in dem als Flüssigkeit Wasser und als Sorptionsmittel-Edukt Calciumoxid zur Bildung von gelöschtem Kalk eingesetzt wird, ist die Düseneinheit vorzugsweise derart ausgebildet, dass das Verhältnis zwischen den Düsen des ersten Typs und den Düsen des zweiten Typs 1,0 bis 2,0 vorzugsweise 1,2 bis 1,8, am meisten bevorzugt 1,5 beträgt.

Die Düsen des ersten Typs und die Düsen des zweiten Typs in der Düseneinheit können derart angeordnet sein, dass deren reaktorraumseitigen Auslässe in einem Winkel zwischen 0° und 140° zueinander ausgerichtet sind. Es sind somit sowohl parallele Ausrichtungen der Düsen als auch Ausrichtungen im rechten Winkel denkbar. Ferner können selbstverständlich auch Ausgestaltungen in einem anderen Bereich, zwischen 30° und 65° oder - wie es erfindungsgemäß vorgesehen ist - zwischen 100 und 130°, je nach Reaktorgeometrie von Vorteil sein. Die jeweilige besondere Ausrichtung führt in Abhängigkeit der jeweiligen Reaktorgeometrie zur Ausbildung eines besonders homogenen mit Flüssigkeit angereicherten Volumenbereiches, wodurch die Durchmischung der einzelnen Edukte verbessert und der die Ausbeute an Sorptionsmittel weiter verbessert wird.

Weitere Vorteile und Merkmale der Erfindung ergeben sich aus der folgenden Beschreibung anhand der Figuren. Dabei zeigen:
- Fig. 1: eine schematische Darstellung einer Rauchgasreinigungsanlage gemäß der Erfindung;
- Fig. 2: ein Flussdiagramm eines Verfahrens zur Reinigung von Rauchgas gemäß der Erfindung.

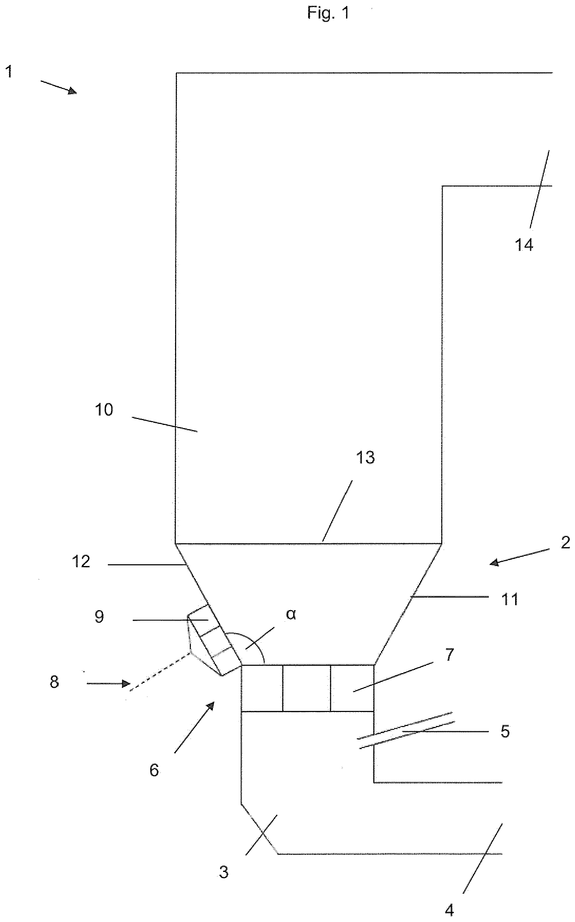

Fig. 1 zeigt eine erfindungsgemäße Rauchgasreinigungsanlage 1 gemäß der Erfindung in schematischer Darstellung. Die Rauchgasreinigungsanlage 1 verfügt über einen Wirbelschichtreaktor 2. Der Wirbelschichtreaktor 2 weist eine Rauchgaseinlasseinheit 3 auf. Das zu reinigende Rauchgas strömt durch einen Rauchgaseinlass 4 der Rauchgaseinlasseinheit 3 in den Wirbelschichtreaktor 2. Der Wirbelschichtreaktor 2 weist ferner einen Feststoffeinlass 5 auf. Der Feststoffeinlass 5 mündet seitlich in die Rauchgaseinlasseinheit 3. Über den Feststoffeinlass 5 kann der Reinigungsanlage der für die Ausbildung der Wirbelschicht notwendige Feststoff, vorliegend als Granulat, zugeführt werden. Der Feststoff ist gemäß der Erfindung wenigstens teilweise durch ein ebenfalls in Granulatform vorliegendes Sorptionsmittel-Edukt gebildet. Durch die Anordnung des Feststoffeinlasses an der Seite der Rauchgaseinlasseinheit 3 kann der Feststoff in einfacher Weise in den Rauchgasstrom eingeleitet werden. Der Rauchgasstrom trägt den Feststoff mit sich zur Düseneinheit 6. Die Düseneinheit 6 verfügt vorliegend über Düsen eines ersten Typs 7. Die Düsen 7 sind vorliegend als Venturi-Düsen ausgebildet.

Der Wirbelschichtreaktor 2 verfügt ferner über ein nicht näher gezeigtes Flüssigkeitszuleitungssystem 8, welches leitungstechnisch vollständig getrennt von der Rauchgaseinlasseinheit 3 ausgebildet ist. Das Flüssigkeitszuleitungssystem 8 ist vorliegend mit der Düseneinheit 6 leitungstechnisch verbunden. Innerhalb der Düseneinheit 6 wird die Flüssigkeit zu Düsen eines zweiten Typs 9 geleitet. Die Düsen 9 sind vorliegend als Zerstäuberdüsen ausgebildet. Zwischen den Düsen 7 und den Düsen 9 besteht keinerlei leitungstechnische Verbindung. Eine Kontaktierung des Sorptionsmittel-Eduktes mit der Flüssigkeit innerhalb der Düseneinheit 6 ist somit ausgeschlossen.

Die Düsen 7 dienen der Eindüsung des Rauchgas/Sorptionsmittel-Edukt Gemisches in einen Reaktorraum 10 des Wirbelschichtreaktors 2. Die Düsen 9 dienen der Eindüsung der Flüssigkeit in den Reaktorraum 10. Die Düsen 7, 9 sind derart zueinander angeordnet und ausgerichtet, dass das Sorptionsmittel-Edukt unmittelbar nach der Eindüsung in den Reaktorraum 10 mit der Flüssigkeit kontaktiert wird. Erfindungsgemäß kommt es hierbei zur Erzeugung des hinsichtlich der Rauchgasreinigung aktiven Sorptionsmittels im Reaktorraum 10. Zur Optimierung der Wasserkontaktierung sind die reaktorraumseitigen Auslässe der Düsen 7 und der Düsen 9 in einem bestimmten Winkel ∝ zueinander angeordnet und ausgerichtet. Zur Ausbildung eines erfindungsgemäßen mit Wasser angereicherten Volumenbereiches zur Kontaktierung mit dem Sorptionsmittel-Edukt ist es bei der vorliegenden Geometrie des Reaktorraumes 10 besonders vorteilhaft, die Düsen 7 und 9 derart anzuordnen, dass der Winkel ∝ 120° beträgt.

Das Verhältnis zwischen der Anzahl der Düsen 7 und der Anzahl der Düsen 9 beträgt im vorliegenden Ausführungsbeispiel 1. Die Düseneinheit 6 verfügt damit über die gleiche Anzahl von Düsen 7 und Düsen 9. Vorliegend verfügt die Düseneinheit 6 über sechs Düsen 7 und sechs Düsen 9. Dieses Verhältnis hat sich insbesondere bei der Rauchgasentschwefelung bewährt, bei der das Sorptionsmittel-Edukt Calciumoxid mit der Flüssigkeit Wasser im Reaktorraum 10 kontaktiert wird, um das Sorptionsmittel Calciumhydroxid (gelöschter Kalk) zu bilden.

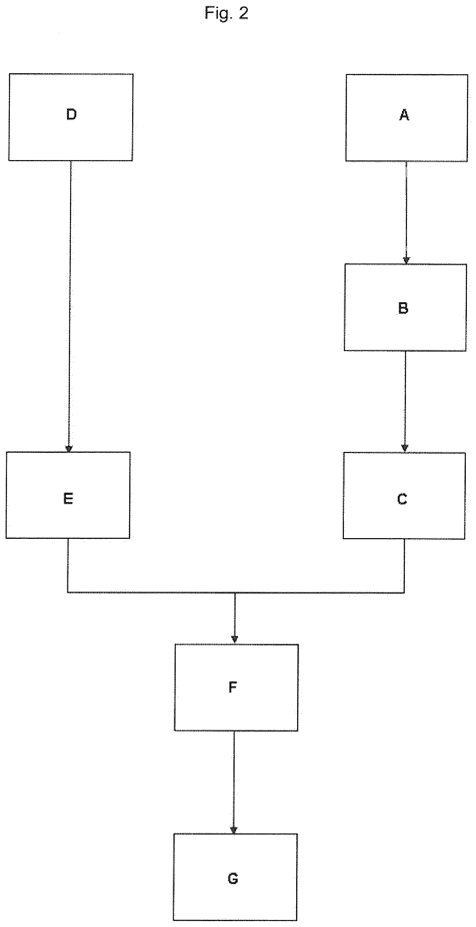

Fig. 2 zeigt ein Flussdiagramm eines erfindungsgemäßen Verfahrens zur Reinigung von Rauchgas, vorliegend insbesondere der Entschwefelung von Rauchgas. Zur Illustration wird nachfolgend auch auf die Bezugszeichen von Fig. 1 Bezug genommen. Bei Verfahrensschritt A wird zunächst das zu entschwefelnde Rauchgas über den Rauchgaseinlass 4 der Rauchgaseinlasseinheit 3 dem Wirbelstromreaktor 2 der Rauchgasreinigungsanlage 1 zugeführt.

Bei Verfahrensschritt B wird das Sorptionsmittel-Edukt, vorliegend Calciumoxid in Granulatform über den Feststoffeinlass 5 in den Rauchgasstrom eingebracht. Der Rauchgasstrom trägt das Calciumoxid nach dessen Einbringung zu der Düseneinheit 6.

Die Rauchgaseinlasseinheit 3 mündet in Strömungsrichtung des Rauchgases in einen Bereich der Düseneinheit 6, der mit den Venturidüsen 7 leitungstechnisch verbunden ist. In Verfahrensschritt C wird das Gemisch aus Rauchgas und Calciumoxid-Granulat über die Venturidüsen 7 in den Reaktorraum 10 des Wirbelschichtreaktors 2 eingedüst.

Parallel zu den Verfahrensschritten A - C wird die Flüssigkeit, vorliegend Wasser, in Verfahrensschritt D über das Flüssigkeitszuleitungssystem 8 der Düseneinheit 6 gesondert von Rauchgas und Calciumoxid zugeführt. Das Flüssigkeitszuführungssystem 8 ist hierbei an einen Bereich der Düseneinheit 6 angeschlossen, der mit den Zerstäuberdüsen 9, nicht jedoch mit den Venturi-Düsen 7, der Düseneinheit 6 leitungstechnisch verbunden ist. Anschließend (E) wird das Wasser über die Zerstäuberdüsen 9 in den Reaktorraum 10 eingedüst. Hierbei wird ein mit Wasser angereicherter Volumenbereich innerhalb des Reaktorraumes 10 ausgebildet, der vom eingedüsten Calciumoxid vollständig durchquert wird. Um sicherzustellen, dass eine Kontaktierung stattfindet, füllt der Volumenbereich den kompletten unteren Abschnitt des Reaktorraumes 10 aus. Insbesondere wird der Volumenbereich durch Seitenwände 11, 12 sowie die Eindüshöhe 13 begrenzt (s. Fig. 1).

Im Verfahrensschritt F werden das Calciumoxid und das Wasser im Reaktorraum 10 durch Kontaktierung zur Reaktion gebracht. Hierbei wird das Calciumoxid zu Calciumhydroxid gelöscht. Das auf diese Weise gebildete Calciumhydroxid verfügt infolge der unmittelbaren Erzeugung im Reaktorraum 10 über eine vergleichsweise hohe Aktivität gegenüber den Schwefelbestandteilen des Rauchgases.

Zur Entschwefelung des Rauchgases wird das Calciumhydroxid im Reaktorraum mittels Ausbildung einer Wirbelschicht im Verfahrensschritt G mit dem Rauchgas kontaktiert. Dieses wird hierbei entschwefelt. Das Sorptionsmittel wird nach der Reaktion mit dem Rauchgas durch den Reaktorauslass 14 aus dem Reaktorraum ausgetragen und einer nicht gezeigten Filtereinheit zugeführt. Das kann Sorptionsmittel hierbei recycelt und dem Wirbelschichtprozess erneut zugeführt werden.

### Bezugszeichenliste

- 1: Rauchgasreinigungsanlage
- 2: Wirbelschichtreaktor
- 3: Rauchgaseinlasseinheit
- 4: Rauchgaseinlass
- 5: Feststoffeinlass
- 6: Düseneinheit
- 7: Venturi-Düsen
- 8: Flüssigkeitszuführungssystem
- 9: Zerstäuberdüsen
- 10: Reaktorraum
- 11: Reaktorwand
- 12: Reaktorwand
- 13: Eindüshöhe
- 14: Rauchgasauslass

## Patentansprüche

1. Rauchgasreinigungsanlage mit einem Wirbelschichtreaktor aufweisend eine Rauchgaseinlasseinheit, einen Reaktorraum und eine Düseneinheit, wobei die Düseneinheit zwischen Rauchgaseinlasseinheit und Reaktorraum angeordnet ist, wobei die Düseneinheit Düsen eines ersten Typs zur Eindüsung des zu reinigenden Gases und eines Feststoffes in den Reaktorraum aufweist und, wobei die Düseneinheit Düsen eines zweiten Typs zur Eindüsung von Flüssigkeit in den Reaktorraum aufweist, wobei die Anzahl der Düsen des ersten Typs im Wesentlichen der Anzahl der Düsen des zweiten Typs entspricht, wobei die Düsen des ersten Typs und die Düsen des zweiten Typs derart zueinander angeordnet sind, dass deren reaktorraumseitigen Auslässe in einem Winkel zwischen 100° und 130° zueinander stehen, wobei die Düsen des zweiten Typs als Zerstäuberdüsen ausgebildet sind, wobei die Düsen des ersten Typs als Venturidüsen ausgebildet sind.

2. Rauchgasreinigungsanlage nach Anspruch 1, **dadurch gekennzeichnet, dass** das Verhältnis zwischen der Anzahl der Düsen des ersten Typs und der Anzahl der Düsen des zweiten Typs 0,8 bis 1,3 beträgt.

3. Rauchgasreinigungsanlage nach einem der Ansprüche 1 oder 2, **dadurch gekennzeichnet, dass** an mehreren Düsen des ersten Typs ein seitlicher Feststoffeinlass ausgebildet ist.

4. Verfahren zur Reinigung von Rauchgas mittels einer Rauchgasreinigungsanlage gemäß einem der Ansprüche 1 bis 3, wobei das zu reinigende Rauchgas und ein als Feststoff vorliegendes Sorptionsmittel-Edukt in einen Reaktorraum eines Wirbelschichtreaktors eingedüst werden, und wobei eine Flüssigkeit gesondert vom Rauchgas und dem Sorptionsmittel-Edukt in den Reaktorraum eingedüst wird, wobei das Sorptionsmittel-Edukt im Wirbelschichtreaktor mit der Flüssigkeit kontaktiert und in ein als Feststoff vorliegendes Sorptionsmittel umgewandelt wird, wobei als Sorptionsmittel-Edukt CaO mittels der Düsen des ersten Typs eingedüst wird, wobei als Flüssigkeit Wasser mittels der Düsen des zweiten Typs eingedüst wird, wobei das Sorptionsmittel-Edukt in das Sorptionsmittel Ca(OH)₂ umgewandelt wird, wobei die Flüssigkeit bei der Eindüsung in den Reaktorraum des Wirbelschichtreaktors zerstäubt wird.

5. Verfahren nach Anspruch 4, **dadurch gekennzeichnet, dass** das zu reinigende Rauchgas im Reaktorraum mit dem im Reaktorraum gebildeten Sorptionsmittel kontaktiert wird, wobei das Rauchgas entschwefelt wird.

## Claims

1. Flue gas cleaning installation with a fluidized bed reactor comprising a flue gas inlet unit, a reactor chamber and a nozzle unit, wherein the nozzle unit is arranged between the flue gas inlet unit and the reactor chamber, wherein the nozzle unit comprises nozzles of a first type for the introduction of the gas to be cleaned and a solid into the reactor chamber and wherein the nozzle unit comprises nozzles of a second type for the introduction of liquid into the reactor chamber, wherein the number of nozzles of the first type substantially corresponds to the number of nozzles of the second type, wherein the nozzles of the first type and the nozzles of the second type are arranged relative to one another in such a way that their outlets on the reactor chamber side are at an angle of between 100° and 130° relative to one another, wherein the nozzles of the second type are designed as atomizer nozzles, wherein the nozzles of the first type are designed as Venturi nozzles.

2. Flue gas cleaning installation according to claim 1, **characterized in that** the ratio between the number of nozzles of the first type and the number of nozzles of the second type is 0.8 to 1.3.

3. Flue gas cleaning installation according to one of claims 1 or 2, **characterized in that** a lateral solids inlet is formed at several nozzles of the first type.

4. Method for cleaning flue gas by means of a flue gas cleaning installation according to one of claims 1 to 3, wherein the flue gas to be cleaned and a sorbent educt present as a solid are injected into a reactor chamber of a fluidized bed reactor and wherein a liquid is injected into the reactor chamber separately from the flue gas and the sorbent educt, wherein the sorbent educt is contacted with the liquid in the fluidized bed reactor and converted into a sorbent present as a solid, wherein CaO is injected as sorbent educt by means of the nozzles of the first type, wherein water is injected as liquid by means of the nozzles of the second type, wherein the sorbent educt is converted into the sorbent Ca(OH)₂, wherein the liquid is atomized upon injection into the reactor chamber of the fluidized bed reactor.

5. Method according to claim 4, **characterized in that** the flue gas to be cleaned is contacted in the reactor chamber with the sorbent formed in the reactor chamber, the flue gas being desulphurized.

## Revendications

1. Installation d'épuration de gaz de fumée avec un réacteur à lit fluide comprenant une unité d'entrée de gaz de fumée, une chambre de réacteur et une unité de buses, dans laquelle l'unité de buses est disposée entre l'unité d'entrée de gaz de fumée et la chambre de réacteur, dans laquelle l'unité de buses comprend des buses d'un premier type pour l'introduction du gaz à épurer et d'un solide dans la chambre de réacteur et dans laquelle l'unité de buses comprend des buses d'un deuxième type pour l'introduction de liquide dans la chambre de réacteur, le nombre de buses du premier type correspondant sensiblement au nombre de buses du deuxième type, les buses du premier type et les buses du deuxième type étant disposées les unes par rapport aux autres de telle sorte que leurs sorties du côté de la chambre du réacteur forment un angle compris entre 100° et 130° les unes par rapport aux autres, les buses du deuxième type étant conçues comme des buses d'atomisation, les buses du premier type étant conçues comme des buses Venturi.

2. Installation d'épuration de gaz de fumée selon la revendication 1, **caractérisée en ce que** le rapport entre le nombre de buses du premier type et le nombre de buses du deuxième type est de 0,8 à 1,3.

3. Installation d'épuration de gaz de fumée selon l'une des revendications 1 ou 2, **caractérisée en ce qu'**une entrée latérale de solides est formée au niveau de plusieurs buses du premier type.

4. Procédé d'épuration de gaz de fumée au moyen d'une installation d'épuration de gaz de fumée selon l'une des revendications 1 à 3, dans lequel le gaz de fumée à épurer et un éduit de sorbant présent sous forme solide sont injectés dans une chambre de réacteur d'un réacteur à lit fluide et dans lequel un liquide est injecté dans la chambre de réacteur séparément du gaz de fumée et de l'éduit de sorbant, dans lequel l'éduit de sorbant est mis en contact avec le liquide dans le réacteur à lit fluide et converti en un sorbant présent sous forme solide, dans lequel CaO est injecté comme éduit de sorbant au moyen des buses du premier type, dans lequel de l'eau est injectée comme liquide au moyen des buses du deuxième type, dans lequel l'éduit de sorbant est converti en le sorbant Ca(OH)₂, dans lequel le liquide est atomisé lors de l'injection dans la chambre de réacteur du réacteur à lit fluide.

5. Procédé selon la revendication 4, **caractérisé en ce que** le gaz de fumée à épurer est mis en contact, dans la chambre de réacteur, avec le sorbant formé dans la chambre de réacteur, le gaz de fumée étant désulfuré.
